# EUROPEAN PATENT SPECIFICATION

(11) **EP 4 061 115 B1**
(45) Date of publication and mention of the grant of the patent: **30.07.2025**
(21) Application number: 20811730.9
(22) Date of filing: 03.11.2020
(51) Int. Cl.: A01G 7/06, A01G 17/00

(54) **A METHOD FOR THE CONSERVATIVE TREATMENT OF AT LEAST ONE SYMPTOMATIC FRUIT PLANT SHOWING SYMPTOMS OF A DISEASE**
VERFAHREN ZUR KONSERVATIVEN BEHANDLUNG VON MINDESTENS EINER SYMPTOMATISCHEN FRUCHTPFLANZE MIT SYMPTOMEN EINER KRANKHEIT
PROCÉDÉ DE TRAITEMENT CONSERVATEUR D'AU MOINS UNE PLANTE FRUITIÈRE SYMPTOMATIQUE PRÉSENTANT DES SYMPTÔMES D'UNE MALADIE

(30) Priority: 19.11.2019 IT 201900021546
(43) Date of publication of application: 28.09.2022
(73) Proprietor: ENDOFRUIT S.R.L., 37012 Bussolengo (VR) (IT)
(72) Inventor: SCAPINI, Cristiano, 37012 Bussolengo (Verona) (IT)
(74) Representative: Lissandrini, Marco
(86) International application number: PCT/IB2020/060315
(87) International publication number: WO 2021/099868

(56) References cited:
- WO-A1-01/76355
- WO-A1-2012/052506
- WO-A2-02/03778
- GB-A- 2 213 032
- US-A- 4 833 824
- US-A- 5 477 638

## Description

### TECHNICAL FIELD

The present invention relates to a method for the conservative treatment of fruit plants showing symptoms of a disease.

In particular, the invention refers to a method for the conservative treatment of fruit plants showing symptoms of a specific disease that is generally not treatable.

### PRIOR ART

In the sector of ornamental plants, the use of endotherapy to administer plant protection substances with the aim of treating arboreal plants affected by parasitic and fungal pathologies is well known. In greater detail, endotherapy entails making at least one hole in the trunk of the plant to be treated in order to inject nutrient and/or medicinal substances directly into the xylem vessels by means of one or more microinjections that are the least invasive possible for the plant. In this manner, the injected plant protection substance is able to spread through the plant until reaching the leaves so as to be stored inside it and act continuously and constantly over time to weaken the disease that has affected it.

WO 02/03778 A2, US 5 477 638 A, US 4 833 824 A, GB 2 213 032 A disclose conservative treatments for plants wherein treatment fluid is injected into the xylem of a plant. Said documents however do not disclose that during the period of quiescence at least one hole is being made in the trunk of the symptomatic plant until reaching a non-necrotic portion of the xylem and that an amount of treatment fluid is being introduced during the period of quiescence into the non-necrotic portion of the xylem by means of said at least one hole such as to provoke the discharge of the same treatment fluid from the pruned portions of the symptomatic plant and/or the discharge of sap from the same symptomatic plant.

In fruit growing, at present, when the first symptoms of a very virulent disease are identified on some plants, it is necessary to proceed quickly and in a controlled manner to remove the infected plants in order to prevent the disease from propagating to the neighbouring healthy ones in the field.

More precisely, the fruit grower must adopt a clearance protocol aimed at eliminating the diseased plants so as to reduce the risk of the disease spreading in the field as much as possible. In particular, this protocol entails uprooting or cutting almost at the base (for example in the case of grapevines), taking care to use tools different from the ones used for the normal pruning operations on healthy plants.

In addition, it should be underscored that the first symptoms of diseases are usually identified during the vegetative phase of the plant, that is, the period during which, because of the physiology of fruit plants, it is difficult to carry out endotherapeutic treatments.

Furthermore, given that the majority of plant protection treatments are concentrated in the plant vegetation period, the operator involved in the endotherapeutic treatment is at greater risk of chemical contact with harmful substances.

Finally, a further drawback of the prior art is the consequent increase in production costs due to the removal of diseased plants, the loss of earnings from the harvest and the subsequent replanting with healthy plants.

### SUMMARY

In this context, the technical task at the basis of the present invention is to propose a method for the conservative treatment of fruit plants showing symptoms of a disease which overcomes the aforementioned drawbacks of the prior art.

In particular, one object of the present invention is to illustrate a method for the conservative treatment of fruit plants that is effective and simultaneously minimally invasive for the plant.

Another object of the present invention is to propose a method for the conservative treatment of fruit plants showing symptoms of a disease that is capable of optimising the fruit grower's production costs, preferably capable of reducing the number of plants that need to be removed to prevent the propagation of the disease.

A further object of the present invention is to provide a method for the conservative treatment of fruit plants showing symptoms of a disease that is capable of safeguarding the health of the operator who has to carry out the treatment itself. More precisely, the method does not require the intervention of the operator during the period in which the field of fruit plants undergoes the most treatment, so it does not require the application of an excessive number of safety devices, for example full-body protective suits or coveralls and integrated head protection, for the purpose of carrying out the treatment in question, in addition to the normal treatments to be performed.

The stated technical task and the specified objects are substantially achieved by a method for the conservative treatment of fruit plants showing symptoms of a disease, the method comprising the technical features disclosed in the independent claim. The dependent claims correspond to further advantageous aspects of the invention.

It should be noted that this summary introduces a selection of concepts in simplified form, which will be further elaborated in the detailed description set forth below.

The invention relates to a method for the conservative treatment of at least one fruit plant showing symptoms of a disease. The method comprises the steps of:
- identifying the symptomatic plant which has undergone a pruning step;
- identifying a period of quiescence of the symptomatic plant; and
- during the period of quiescence, for example during autumn/winter pruning, making at least one hole in the trunk of the symptomatic plant until reaching the xylem;
- during the period of quiescence introducing into the non-necrotic portion of the xylem, by means of said at least one hole, an amount of treatment fluid such as to provoke the discharge of the same treatment fluid from the pruned portions of the symptomatic plant and/or the discharge of sap from the same symptomatic plant.

The symptomatic plants treated are preferably fruit plants having a trunk with a maximum diameter of about 15 centimetres.

Advantageously, the operating steps of said method are performed during a period of the plant in which the sap-transporting (or xylem) vessels enable an easy introduction and flow of the treatment fluid, preferably during a period of quiescence of each symptomatic plant. The plant's biological cycle substantially comprises a period of quiescence, in which the plant's vital functions are suspended or greatly slowed due to the reduction in the flow of sap through the xylem vessels, and a vegetative period, in which a growth of all the plant organs takes place as a result of the complete reactivation of the flow of sap through the xylem vessels.

In other words, the above-mentioned conservative treatment method allows a treatment fluid, for example a nutrient and/or medicinal and/or stimulant substance, to be easily introduced through the xylem vessels of the trunk of a plant showing symptoms of a disease. In fact, during the period of quiescence, the pressure inside the xylem vessels is practically nil and, accordingly, the latter allow an easy passage of substances (for example the sap of the plant itself or any treatment fluids introduced from the outside through special holes bored in the trunk of the plant until reaching the xylem), also by virtue of a pruning carried out on the plant. In this manner, the method makes it possible to inhibit the proliferation of the disease and, therefore, to preserve plant productivity by maintaining the fruit plants in optimal vegetative conditions and making them capable of responding positively to conditions of high stress.

### BRIEF DESCRIPTION OF THE DRAWINGS

Additional features and advantages of the present invention will emerge more clearly from the appended drawings, which serve to illustrate, in combination with the description, the inventive principles at the basis of the invention.
Figure 1 illustrates a schematic view of a cross section of the trunk of a fruit plant showing symptoms of a disease during a step of the conservative treatment method.
Figure 2 illustrates a schematic view of different types of a same fruit plant, specifically a grapevine.

### DETAILED DESCRIPTION

The present invention relates to a method for the conservative treatment of fruit plants showing symptoms of a disease.

In botany, mainly in reference to arboreal or fruit-bearing plants, the annual cycle of the plants is characterised by a phase of vegetative development (also known as "vegetative period") alternating with a rest period (also known as "period of quiescence" or "period of winter quiescence").

Therefore, in the present description, the term "vegetative period" relates to a period in which a growth activity of all the plant organs is present.

In contrast, in the present description, the term "period of quiescence" relates to a period of the biological cycle in which in the whole plant, or in some of the organs thereof, vital functions are suspended or greatly slowed (also known as vegetative stasis, or rest, or dormancy).

In the case of fruit plants, the vegetative period generally begins in spring and lasts until the natural loss of leaves. In greater detail, this period is composed in turn of another two sub-phases: a phase of more or less intense vegetative activity, and a reproductive phase which regards the formation and development of buds containing the flower primordia.

Consequently, the period of quiescence begins with the falling of leaves and continues throughout the winter, ending with the start-up of vegetative activity the following spring.

The present invention relates to a method for the conservative treatment of symptomatic plants 1 showing symptoms of a disease. The method is preferably aimed at fruit plants having a trunk 2 of a small diameter, more precisely with a maximum diameter of about 15 centimetres.

For example, the method is applicable in the management of esca disease, a widespread disease with large negative effects on the survival and productivity of grapevines.

In particular, the conservative treatment method comprises the steps of:
- identifying the symptomatic plant 1 which has undergone a pruning step;
- identifying a period of quiescence of the symptomatic plant 1; and
- during the period of quiescence, for example preferably in concomitance with the fruit grower's pruning (generally autumn/winter), making at least one hole 3 in the trunk 2 of the symptomatic plant 1 until reaching the xylem 4;
- introducing into the non-necrotic portion of the xylem 4, by means of said at least one hole 3. an amount of treatment fluid such as to provoke the discharge of the same treatment fluid from the pruned portions of the symptomatic plant 1 and/or the discharge of sap from the same symptomatic plant 1.

Advantageously, carrying out the operating steps during a period of the plant in which the pressure inside the xylem vessels is considerably reduced, or even nil, enables the treatment fluid to be very easily introduced into the xylem vessels of the symptomatic plant 1 without having to overcome operating obstacles, as better explained further below. Even more advantageously, the low pressure inside the xylem vessels due to the period of intervention (i.e. the implementation of the conservative treatment method in the period of quiescence), together with the presence of pruned portions on the symptomatic plant 1, enable an operator to introduce the treatment fluid into the xylem vessels 4 of the symptomatic plant 1 with a low degree of difficulty, since the manual pressure to be exerted in order to introduce the treatment fluid is relatively low.

According to one aspect of the invention, in order to prevent the symptomatic plants 1 from propagating the disease, and the asymptomatic plants, if present, from being infected, the operator must carry out the conservative treatment in the periods in which the performance and effectiveness thereof are maximum.

More precisely, the operator must perform microinjections on the trunk 2 of the symptomatic plant 1 in order to introduce the treatment fluid following the pruning step in the period of quiescence, preferably within a few days after it has been carried out.

The step of injecting the treatment product is preferably carried out manually. In other words, the operator exerts a very small pressure, corresponding to a push of the hand, on the plunger of a syringe 6, which is provided with special needles 7, and attached to a tube that connects it to a reservoir 8 containing the treatment fluid.

Advantageously, the discharge of the treatment fluid and/or sap from the pruned portions (from the "fresh" cuts made during the period of quiescence) offers the operator immediate confirmation of the correct performance of the injection procedure and, therefore, of the correct progress of the treatment method.

According to one aspect of the invention, the step of making at least one hole 3 in the trunk 2 of each symptomatic plant 1 comprises the step of making from one to three holes 3 according to the diameter of the trunk 2 of the symptomatic plant 1 to be treated. In other words, the number of holes 3 to be made on the trunk 2 of the symptomatic plant 1 increases with increases in the diameter of the same symptomatic plant 1. In this manner, it is possible to make a number of holes 3 of a small size on the trunk 2 so that the method is the least invasive possible and, at the same time, the whole volume of the symptomatic plant 1 can be treated with the introduction of the treatment fluid.

In particular, each hole 3 has a diameter ranging between 2 millimetres and 10 millimetres and a maximum depth of 20 millimetres in order to minimise the invasiveness of the conservative treatment method on the symptomatic plant 1.

According to another aspect of the invention, the step of making at least one hole 3 in the trunk 2 of each symptomatic plant 1 comprises the step of making the hole 3 at a height of about one metre from a base of the trunk 2, i.e. from the ground, comprised between 30 centimetres and 100 centimetres, preferably less than one metre and greater than 50 centimetres.

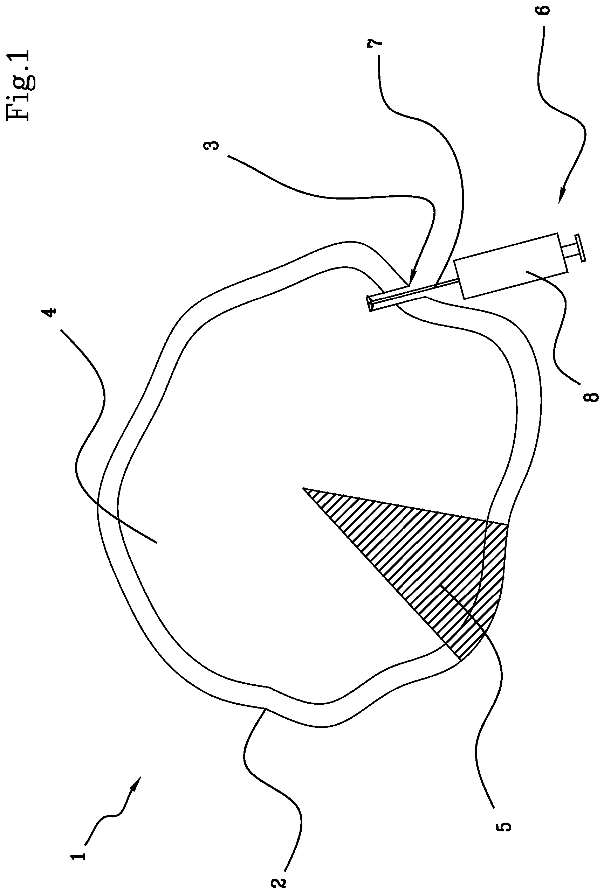

Figure 1 schematically illustrates a cross section of the trunk of a symptomatic plant 1, for example a grapevine affected by esca disease, in which a portion 5 of the xylem 4 is in a state of necrosis and, therefore, not suitable for enabling the injection of the treatment product.

Each hole 3 is bored into the trunk 2 preferably with the use of an electric drill so as to achieve a precise perforation that is the least invasive possible for the plant.

If the hole is drilled in the portion 5 of the plant in a state of necrosis, the operator will not be able to perform the injection of the treatment fluid and, therefore, will have to drill a new hole in a different portion of the trunk 2. At the end of the injection, depending on the variety of the fruit plant and the phenological phase, the holes can be closed off with a special plug made of corn starch.

According to one aspect of the invention, the treatment fluid the operator introduces into the non-necrotic portion of the xylem 4 of the symptomatic plant 1 comprises a fertilising product enriched with thermal water containing sodium chloride, bromide and iodide and fatty acids, i.e. a resistance-inducing fertiliser. According to another aspect of the invention, the treatment fluid comprises colloidal silver and/or fertilising substances and/or plant protection and/or stimulant substances.

The treatment fluid preferably comprises a resistance-inducing fertiliser that enables the fruit plants (for example grapevines, kiwis, pears ...) to be maintained in optimal vegetative conditions, thus making it able to respond positively to conditions of high stress.

Even more preferably, the treatment fluid comprises colloidal silver, as this substance, when injected through the xylem vessels, is capable of inhibiting and blocking the development of the disease within the fruit plant so as to preserve the plant's root system and, consequently, its productivity without there being any need to manage the additional costs of uprooting diseased plants, disposing of them and replanting healthy plants.

Colloidal silver does not have a biocidal (antibacterial or antifungal) function capable of eliminating dry rot or bacteria or fungi present in wood (as a plant protection product might do). In fact, colloidal silver travels through the xylem vessels of healthy wood (and not diseased wood), forming a barrier that confines and separates any diseased portion 5 of the wood (for example, a portion in a state of necrosis) from the healthy wood. In this manner, it prevents the dissemination of the disease in the plant, thus preventing the weakening thereof, a reduction in productivity and the alteration/unusability of the fruit.

In other words, the treatment fluid containing colloidal silver enables the xylem vessels of healthy wood to be preserved so as to protect the plant against the progression of the disease, which is slowed down until coming to a halt.

According to one aspect of the invention, the step of identifying the pruned symptomatic plant 1 comprises the sub-steps of:
- identifying the symptomatic plant 1 during a vegetative period thereof; and
- marking the symptomatic plant 1 with a distinctive element that makes it identifiable in a subsequent period of quiescence or resumption of vegetative growth.

Generally, the first symptoms of a disease that appear are easily detectable by expert eyes during the vegetative period, in the spring/summer.

Therefore, marking a symptomatic plant 1 is particularly useful in cases in which the treatment is carried out at a later time, for example in the period of quiescence, as is actually preferably the case.

For this purpose, according to one possible example, marking can be done with the use of tape that is resistant to atmospheric conditions, capable of lasting for a number of years, and bears an indication of the type of disease afflicting the plant. In this manner, the pruning operations on symptomatic plants 1 can be advantageously managed separately from any treatments to be carried out neighbouring asymptomatic plants, for example in a field or orchard.

According to another aspect of the invention, the pruned symptomatic plant 1 is obtained by means of a pruning step comprising the following sub-steps:
- identifying a period of quiescence of the symptomatic plant 1; and
- pruning the symptomatic plant 1 by cutting off some parts so as to prepare pruned portions useful for the discharge of treatment fluid and/or sap during the step of introducing the same treatment fluid into the xylem 4. Preferably, this step is carried out 15 days at most before the step of introducing an amount of treatment fluid into the xylem 4.

In other words, in the event that the pruning of the symptomatic plant 1 is carried out in the period of quiescence, it is preferable that the step of making a hole in the trunk 2 and the step of introducing the treatment fluid (the latter, in particular, between the two steps) take place no later than 15 days after the pruning step, preferably within a week of the latter. In this manner, the xylem vessels in the pruned portions will be open and, following the introduction of the treatment fluid into the xylem 4, will enable the discharge thereof and/or the discharge of sap from the same pruned portions.

In the event that the period between pruning and the conservative treatment is prolonged beyond that limit of about 15 days, it is possible that the xylem vessels in the pruned portions might cicatrise, thus complicating or even precluding the introduction of the treatment fluid, as the discharge thereof and/or the discharge of sap from the pruned portions would be obstructed. Therefore, in such a case it is advisable to postpone carrying out the conservative treatment with the treatment fluid and to wait for the beginning of the period of resumption of vegetative growth, as in this period the xylem vessels in the pruned portions tend to reopen naturally and, therefore, allow the discharge of sap (in fact, this period is also defined as the "bleeding" period, since the reopening of the xylem vessels brings about a minimal leakage of sap from the previously pruned portions of the plant).

In the example of a grapevine affected by esca disease, the implementation of the treatment method advantageously allows the lignification of the plant's branches and the resumption of the vegetative activity of the shoots, which develop a vegetative area in full activity, the development and formation of clusters with continuity (in particular intact, turgid and completely coloured grapes), and an excellent cost-benefit ratio compared to traditional techniques (for example, uprooting and replanting).

In any case, the symptomatic plants 1 identified must be pruned taking care to use different tools (for example shears) from the ones used for asymptomatic plants. Alternatively, it is possible to use the same shears, adopting the precaution of disinfecting them thoroughly, for example with a 15% solution of quaternary ammonium salts, to avoid transmitting the disease to asymptomatic plants.

In addition, the pruning of symptomatic plants 1 must take place at a different time from any pruning operations on asymptomatic plants and in a controlled manner with respect to the latter, so as not to allow transmission of the disease.

The pruning useful for the application of the conservative treatment method claimed herein is carried out during the period of quiescence, preferably about 20 days earlier than the fruit grower's normal pruning.

Advantageously, pruning in the winter period, for example in the month of November, enables the sap of the symptomatic plant 1 to be discharged from the pruned portions (so-called pruning "wounds") in order to act as a "natural disinfectant" at the site of the cuts made at the end of the execution of the conservative treatment.

The pruning residues of symptomatic plants 1 must be taken out of the field in order to be managed separately to avoid contaminating asymptomatic plants.

Even more advantageously, carrying out the treatment during the period of quiescence (i.e. generally during the winter) advantageously allows the operator to have access to the symptomatic plants when the entire field is not subjected to plant protection treatments, generally spring/summer treatments which abound in harmful substances (the summer treatment generally involves the use of various elements that are harmful to humans in the event of inhalation or direct contact with the skin). In fact, though the operator is equipped with all the necessary protections, there always continues to be a minimal risk of contamination, while the use of a full-body protective suit or coverall provided with integrated head protection would considerably complicate the execution of the treatment method.

According to one aspect of the invention, the method comprises the further steps of:
- determining the type of symptomatic plant 1 that needs to be treated;
- estimating the volume of the trunk of a corresponding asymptomatic plant;
- calculating the theoretical amount of treatment fluid necessary to treat the aforesaid estimated volume;
- measuring the amount of treatment fluid actually introduced into said symptomatic plant 1;
- comparing said measured amount with said theoretical amount in order to derive an estimation of the volume of a non-diseased trunk 2 depending on the difference between the introduced amount of treatment fluid and the theoretical amount of treatment fluid.

In other words, the treatment method is advantageously capable of also providing an estimate of the condition of the wood making up the symptomatic plant 1 to be treated.

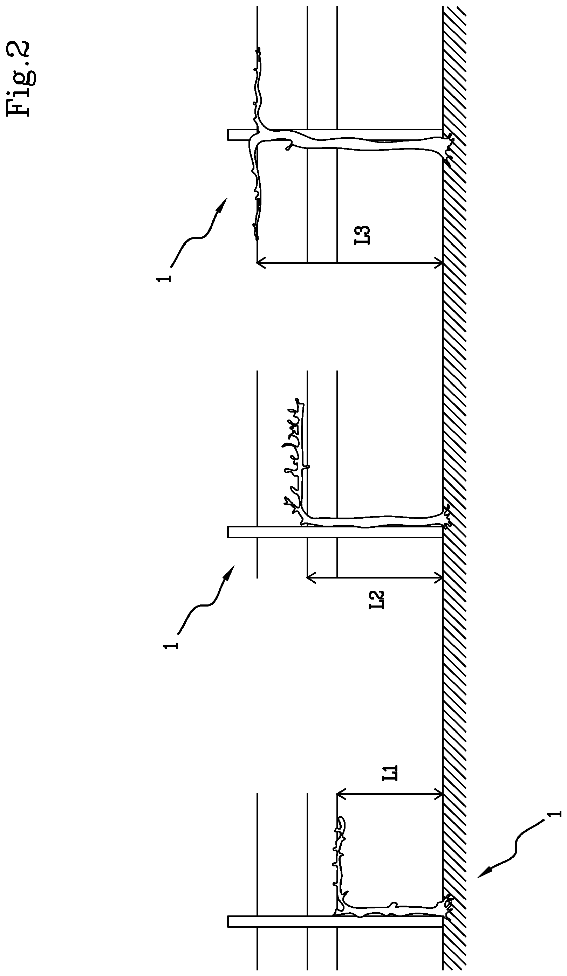

Figure 2 illustrates, in a schematic view, a comparison among three different types of grapevines: guyot, having an average height L1 of about 80 centimetres, cordon, having an average height L2 of about 120 centimetres, and pergola having an average height L3 of about 170 centimetres.

The three types of grapevines taken into consideration, having three trunks 2 with different lengths, do not have same total volume of wood. Therefore, for each type, a calculation was made of the average value of the total volume of wood treatable with the introduction of a fluid treatment along the respective trunk 2. Consequently, for each average value of the total volume of wood a calculation was made of the average value of the treatment fluid introducible along the totality of the volume, as if it were free of any disease and thus of defects (for example portions 5 in a state of necrosis) which preclude a correct flow of treatment fluid.

In other words, for each type of fruit plant it is possible to calculate the average value of the amount of treatment fluid capable of flowing through the xylem vessels between the hole 3 made on the trunk 2 and the pruned portions of the asymptomatic plant. This average value identifies the maximum amount of treatment fluid capable of flowing through the trunk 2 of an asymptomatic plant of a respective type.

The syringe 6 used to introduce the treatment fluid generally has a reservoir 8 with a capacity of about 5 millilitres. Graduated syringes are preferably used in order to dispense a precise dose of treatment fluid into the fruit plant according to the average value of the volume of wood of the trunk 2.

Generally, at least 6 millilitres of treatment fluid are introduced into the xylem 4 of the plant. Preferably and advantageously, about 12 millimetres are introduced therein, by carrying out several repetitions of the injection if the capacity of the reservoir 8 of the syringe 6 is lower than the amount that needs to be introduced.

Knowing the actual amount of treatment fluid inserted in the reservoir 8 of the syringe 6 will enable the operator to estimate the amount of healthy wood of the symptomatic plant 1 simply by determining the value of the amount of treatment fluid introduced through the same symptomatic plant 1.

For example, if three quarters of the average value of the amount of treatment fluid flow through the symptomatic plant 1, the operator will be able to deduce that the progression of the disease is relatively low and, if stopped over time, the productivity of the fruit plant will still be acceptable. If, by contrast, the treatment fluid able to flow through the symptomatic plant 1 is only half or less of the average value of the amount calculated for an asymptomatic plant, the diseased plant is at a very advanced stage of disease which will make a possible future removal thereof necessary, since the productivity will be considerably compromised.

## Claims

1. A method for the conservative treatment of at least one symptomatic fruit plant (1) showing symptoms of a disease, comprising the steps of:
- identifying the symptomatic plant (1) which has undergone a pruning step;
- identifying a period of quiescence of the symptomatic plant (1); and
- during the period of quiescence, making at least one hole (3) in the trunk (2) of the symptomatic plant (1) until reaching a non-necrotic portion (5) of the xylem (4);
- introducing during the period of quiescence into the non-necrotic portion (5) of the xylem (4), by means of said at least one hole (3), an amount of treatment fluid such as to provoke the discharge of the same treatment fluid from the pruned portions of the symptomatic plant (1) and/or the discharge of sap from the same symptomatic plant (1).

2. The method according to claim 1, wherein the step of identifying the pruned symptomatic plant (1) comprises the sub-steps of:
- identifying said symptomatic plant (1) during a vegetative period thereof; and
- marking said symptomatic plant (1) with a distinctive element that makes it identifiable in a subsequent period of quiescence.

3. The method according to claim 1 or 2, wherein the pruned symptomatic plant (1) is obtained by means of a pruning step which comprises the following sub-steps:
- identifying a period of quiescence of the symptomatic plant (1); and
- cutting off one or more parts of the symptomatic plant (1) so as to prepare pruned portions useful for the discharge of treatment fluid and/or sap during the step of introducing the same treatment fluid into the non-necrotic portion (5) of the xylem (4); carrying out this step 15 days at most before the step of introducing an amount of treatment fluid into the non-necrotic portion (5) of the xylem (4).

4. The method according to claim 3, wherein said step of carrying out pruning takes place at a different moment from a step of pruning any other asymptomatic plants present nearby.

5. The method according to any preceding claim, wherein said step of making at least one hole (3) in the trunk (2) of each symptomatic plant (1) comprises the step of making from one to three holes depending on a diameter of the trunk (2) of the symptomatic plant (1) to be treated; each hole (3) having a diameter ranging between 2 millimetres and 10 millimetres and a maximum depth of 20 millimetres.

6. The method according to any preceding claim, wherein said step of making at least one hole (3) in the trunk (2) of each symptomatic plant (1) comprises the step of making said at least one hole (3) at a height from the base of the trunk (2) comprised between 30 centimetres and 100 centimetres.

7. The method according to any preceding claim, wherein said treatment fluid comprises colloidal silver and/or fertilising substances and/or plant protection substances.

8. The method according to any preceding claim, comprising the further steps of:
- estimating the volume of the trunk of a corresponding asymptomatic plant;
- calculating the theoretic amount of treatment fluid necessary to treat the aforesaid estimated volume;
- measuring the amount of treatment fluid actually introduced into said symptomatic plant (1);
- comparing said measured amount with said theoretical amount in order to derive an estimation of the volume of a non-diseased trunk (2) depending on the difference between the introduced amount of treatment fluid and the theoretical amount of treatment fluid.

## Patentansprüche

1. Verfahren zur konservativen Behandlung von mindestens einer symptomatischen Fruchtpflanze (1) mit Symptomen einer Krankheit, umfassend die folgenden Schritte:
- Identifizieren der symptomatischen Pflanze (1), die einem Schritt zum Ausästen unterzogen wurde;
- Identifizieren einer Ruheperiode der symptomatischen Pflanze (1), und
- Ausbilden von mindestens einem Loch (3) im Stamm (2) der symptomatischen Pflanze (1) während der Ruheperiode, bis ein nicht abgestorbener Abschnitt (5) des Xylems (4) erreicht wird;
- Einführen einer Menge an Behandlungsflüssigkeit während der Ruheperiode in den nicht abgestorbenen Abschnitt (5) des Xylems (4) mittels des mindestens einen Lochs (3), sodass bewirkt wird, dass die Behandlungsflüssigkeit aus den ausgeästeten Abschnitten der symptomatischen Pflanze (1) austritt und/oder Pflanzensaft aus der symptomatischen Pflanze (1) austritt.

2. Verfahren nach Anspruch 1, wobei der Schritt zum Identifizieren der ausgeästeten symptomatischen Pflanze (1) die folgenden Unterschritte umfasst:
- Identifizieren der symptomatischen Pflanze (1) während einer Vegetationsperiode dieser, und
- Markieren der symptomatischen Pflanze (1) mit einem Unterscheidungselement, anhand dessen diese in einer darauffolgenden Ruheperiode identifizierbar ist.

3. Verfahren nach Anspruch 1 oder 2, wobei die ausgeästete symptomatische Pflanze (1) mittels eines Schritts zum Ausästen erhalten wird, der die folgenden Unterschritte umfasst:
- Identifizieren einer Ruheperiode der symptomatischen Pflanze (1), und
- Abschneiden von einem oder mehreren Teilen der symptomatischen Pflanze (1), sodass ausgeästete Abschnitte vorbereitet werden, die nützlich sind, um Behandlungsflüssigkeit und/oder Pflanzensaft während des Schritts zum Einführen der Behandlungsflüssigkeit in den nicht abgestorbenen Abschnitt (5) des Xylems (4) austreten zu lassen; Durchführen dieses Schritts höchstens 15 Tage vor dem Schritt zum Einführen einer Menge an Behandlungsflüssigkeit in den nicht abgestorbenen Abschnitt (5) des Xylems (4).

4. Verfahren nach Anspruch 3, wobei der Schritt zum Durchführen des Ausästens zu einem anderen Zeitpunkt als ein Schritt zum Ausästen irgendwelcher anderen asymptomatischen Pflanzen in der Nähe stattfindet.

5. Verfahren nach einem der vorhergehenden Ansprüche, wobei der Schritt zum Ausbilden von mindestens einem Loch (3) im Stamm (2) einer jeden symptomatischen Pflanze (1) den Schritt zum Ausbilden von einem bis drei Löchern je nach einem Durchmesser des Stamms (2) der zu behandelnden symptomatischen Pflanze (1) umfasst, wobei ein jedes Loch (3) einen Durchmesser im Bereich zwischen 2 Millimetern und 10 Millimetern und eine maximale Tiefe von 20 Millimetern aufweist.

6. Verfahren nach einem der vorhergehenden Ansprüche, wobei der Schritt zum Ausbilden von mindestens einem Loch (3) im Stamm (2) einer jeden symptomatischen Pflanze (1) den Schritt zum Ausbilden des mindestens einen Lochs (3) in einer Höhe von der Basis des Stamms (2) zwischen 30 Zentimetern und 100 Zentimetern umfasst.

7. Verfahren nach einem der vorhergehenden Ansprüche, wobei die Behandlungsflüssigkeit kolloidales Silber und/oder Düngemittel und/oder Pflanzenschutzmittel umfasst.

8. Verfahren nach einem der vorhergehenden Ansprüche, umfassend die folgenden weiteren Schritte:
- Schätzen des Volumens des Stamms einer entsprechenden asymptomatischen Pflanze;
- Berechnen der theoretischen Behandlungsflüssigkeitsmenge, die erforderlich ist, um das genannte geschätzte Volumen zu behandeln;
- Messen der tatsächlich in die symptomatische Pflanze (1) eingeführten Behandlungsflüssigkeitsmenge;
- Vergleichen der gemessenen Menge mit der theoretischen Menge, um eine Schätzung des Volumens eines nicht erkrankten Stamms (2) je nach dem Unterschied zwischen der eingeführten Behandlungsflüssigkeitsmenge und der theoretischen Behandlungsflüssigkeitsmenge abzuleiten.

## Revendications

1. Procédé de traitement conservateur d'au moins une plante fruitière symptomatique (1) présentant les symptômes d'une maladie, comprenant les étapes de :
- identifier la plante symptomatique (1) ayant subi une étape de tailler ;
- identifier une période de quiescence de la plante symptomatique (1) ; et
- pendant la période de quiescence, faire au moins un trou (3) dans le tronc (2) de la plante symptomatique (1) jusqu'à atteindre une portion non nécrotique (5) du xylème (4) ;
- introduire pendant la période de quiescence dans la portion non nécrotique (5) du xylème (4), au moyen dudit au moins un trou (3), une quantité de liquide de traitement de manière à provoquer l'évacuation du même liquide de traitement des portions taillées de la plante symptomatique (1) et/ou l'évacuation de la sève de la même plante symptomatique (1).

2. Procédé selon la revendication 1, dans lequel l'étape d'identifier la plante symptomatique taillée (1) comprend les sous-étapes de :
- identifier ladite plante symptomatique (1) pendant une période végétative de celle-ci ; et
- marquer ladite plante symptomatique (1) avec un élément distinctif qui la rend identifiable dans une période ultérieure de quiescence.

3. Procédé selon la revendication 1 ou 2, dans lequel la plante symptomatique taillée (1) est obtenue au moyen d'une étape de tailler qui comprend les sous-étapes suivantes :
- identifier une période de quiescence de la plante symptomatique (1) ; et
- couper une ou plusieurs parties de la plante symptomatique (1) de manière à préparer des portions taillées utiles pour l'évacuation du liquide de traitement et/ou de la sève lors de l'étape d'introduire le même liquide de traitement dans la portion non nécrotique (5) du xylème (4) ; réaliser cette étape 15 jours au plus avant l'étape d'introduire une quantité de liquide de traitement dans la portion non nécrotique (5) du xylème (4).

4. Procédé selon la revendication 3, dans lequel ladite étape de réaliser la taille a lieu à un moment différent d'une étape de tailler toute autre plante asymptomatique présente à proximité.

5. Procédé selon l'une quelconque des revendications précédentes, dans lequel ladite étape de réaliser au moins un trou (3) dans le tronc (2) de chaque plante symptomatique (1) comprend l'étape de réaliser un à trois trous en fonction d'un diamètre du tronc (2) de la plante symptomatique (1) à traiter ; chaque trou (3) ayant un diamètre compris entre 2 millimètres et 10 millimètres et une profondeur maximale de 20 millimètres.

6. Procédé selon l'une quelconque des revendications précédentes, dans lequel ladite étape de réaliser au moins un trou (3) dans le tronc (2) de chaque plante symptomatique (1) comprend l'étape de réaliser ledit au moins un trou (3) à une hauteur à partir de la base du tronc (2) comprise entre 30 centimètres et 100 centimètres.

7. Procédé selon l'une quelconque des revendications précédentes, dans lequel ledit liquide de traitement comprend de l'argent colloïdal et/ou des substances fertilisantes et/ou des substances phytosanitaires.

8. Procédé selon l'une quelconque des revendications précédentes, comprenant les étapes supplémentaires de :
- estimer le volume du tronc d'une plante asymptomatique correspondante ;
- calculer la quantité théorique de liquide de traitement nécessaire pour traiter le volume estimé précité ;
- mesurer la quantité de liquide de traitement effectivement introduite dans ladite plante symptomatique (1) ;
- comparer ladite quantité mesurée avec ladite quantité théorique afin de dériver une estimation du volume d'un tronc non malade (2) en fonction de la différence entre la quantité introduite de liquide de traitement et la quantité théorique de liquide de traitement.
